# EUROPÄISCHE PATENTSCHRIFT

(11) **EP 3 583 520 B1**
(45) Veröffentlichungstag und Bekanntmachung des Hinweises auf die Patenterteilung: **26.07.2023**
(21) Anmeldenummer: 18714147.8
(22) Anmeldetag: 09.03.2018
(51) Int. Cl.: G06F 16/182

(54) **VERFAHREN ZUM BETRIEB EINES DATENSPEICHERSYSTEMS, COMPUTERPROGRAMM ZUR IMPLEMENTIERUNG DES VERFAHRENS SOWIE NACH DEM VERFAHREN ARBEITENDES DATENSPEICHERSYSTEM**
METHOD OF OPERATING A DATA STORAGE SYSTEM, COMPUTER PROGRAM FOR IMPLEMENTING THE METHOD AND DATA STORAGE SYSTEM OPERATING ACCORDING TO THE METHOD
PROCÉDÉ DE FONCTIONNEMENT D'UN SYSTÈME DE MÉMOIRE DE DONNÉES, PROGRAMME INFORMATIQUE DESTINÉ À LA MISE EN OEUVRE DU PROCÉDÉ ET SYSTÈME DE MÉMOIRE DE DONNÉES FONCTIONNANT SELON LE PROCÉDÉ

(30) Priorität: 12.04.2017 EP 17166208
(43) Veröffentlichungstag der Anmeldung: 25.12.2019
(73) Patentinhaber: Siemens Aktiengesellschaft, 80333 München (DE)
(72) Erfinder: RIPPLINGER, Thomas, 76149 Karlsruhe (DE)
(74) Vertreter: Siemens Patent Attorneys
(86) Internationale Anmeldenummer: PCT/EP2018/055919
(87) Internationale Veröffentlichungsnummer: WO 2018/188862

(56) Entgegenhaltungen:
- US-A1- 2012 272 025
- US-A1- 2014 372 561
- US-A1- 2015 205 818
- US-A1- 2016 050 114
- ERICSSON LM: "IoT Use Case", ETSI DRAFT; NFVEVE(16)000126, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. WG - NFV EVE - Evolution and Ecosystem 26 July 2016 (2016-07-26), pages 1-9, XP014277056, Retrieved from the Internet: URL:docbox.etsi.org\ISG\NFV\EVE\05-CONTRIB UTIONS\2016\NFVEVE(16)000126_IoT_Use_Case. docx [retrieved on 2016-07-26]

## Beschreibung

Verfahren zum Betrieb eines Datenspeichersystems, Computerprogramm zur Implementierung des Verfahrens sowie nach dem Verfahren arbeitendes Datenspeichersystem

Die Erfindung betrifft ein Verfahren zum effizienten Speichern von Daten aus dem Umfeld des sogenannten Internet of Things (IoT). Das Speichern der Daten erfolgt in einem Datenspeichersystem. Im Weiteren betrifft die Erfindung ein Computerprogramm zur Implementierung des Verfahrens sowie ein nach dem Verfahren arbeitendes Datenspeichersystem. Die Erfindung wird durch die anliegenden Ansprüche definiert.

Im Internet of Things werden bekanntlich große Datenmengen aus verteilten Datenquellen dezentral gesammelt, übertragen und zentral in einem im Folgenden gemäß der üblichen Terminologie als Backend-System bezeichneten Datenspeichersystem gespeichert und zur weiteren Verwendung durch Applikationen und Dienste bereitgestellt. Die Speicherung der IoT-Daten innerhalb des Backend-Systems erfolgt üblicherweise in mehreren verschiedenen Datenspeichern.

Die Speicherung der beim Internet of Things anfallenden großen Datenmengen in dem Backend-System verursacht Kosten im laufenden Betrieb. Diese sind umso höher, je länger die IoT-Daten gespeichert werden und je höher die Anforderungen an die Datenbereitstellung sind. Für die Datenbereitstellung sind wesentliche Qualitätskriterien unter anderem einerseits die sogenannte Latenz oder Latenzzeit - im Folgenden kurz als Latenz bezeichnet - und andererseits die verfügbaren Datenabfragefunktionen. Unter der Latenz versteht man den zeitlichen Verzug zwischen einer Datenanfrage durch eine Daten konsumierende Anwendung und einer Datenbereitstellung durch das unterlagerte technische System. Datenabfragefunktionen unterscheiden sich durch Art und Umfang der zur Verfügung stehenden Filter- und Aggregatsfunktionen sowie deren Kombinationsmöglichkeiten. Die Qualität der Datenbereitstellung wird wesentlich bestimmt durch die jeweils verwendeten unterlagerten technischen Datenspeicher. Beispielsweise zeichnet sich eine sogenannte In-Memory Datenbank durch eine sehr geringe Latenz sowie flexible Anfragemöglichkeiten aus, ist jedoch teuer. Eine sogenannte NoSQL Datenbank (NoSQL = Not only SQL) oder ein einfaches Dateisystem (Filesystem) weist eine höhere Latenz und weniger flexible Abfragemöglichkeiten auf, ist aber mit geringeren Kosten verbunden. Komplexe Abfragen auf Basis der Datenwerte (zum Beispiel eine Abfrage wie "Wann war die Drehzahl höher als 400?") ist bei NoSQL Datenbanken nur nach Anlegen eines spezifischen Index möglich.

Aus der US 2014/0372561 A1 ist bereits eine Zuordnung von Anwendungen zu Sensordaten mittels Metadaten der Sensoren, Sensordaten und Anwendungen insbesondere für eine Analyse von Verkehrsflüssen bekannt.

Aus der US 2015/0205818 A1 ist bereits die Zuweisung von Speicherplätzen auf Basis mehrerer Zuweisungsvorgaben für Daten von Speicherplatzkunden eines Anbieters bekannt.

Aus der US 2016/050114 A1 ist bereits die Zuordnung von Anwendungen zu Sensordaten mittels Metadaten der Sensoren und Latenzkritieren bekannt.

Bei den heute verfügbaren Datenspeichersystemen geht eine hohe Qualität der Datenbereitstellung mit höheren Kosten einher. Daher ist es in aller Regel nicht sinnvoll, alle Daten in einem gemeinsamen Datenspeicher abzulegen.

Im Umfeld von Internet of Things-Systemen sind die zu verarbeitenden IoT-Daten üblicherweise heterogen und umfassen zum Beispiel Sensordaten, die insbesondere in Form von Zeitreihendaten mit Zeitstempel oder Zahlenwerten gespeichert werden, Prozess- und Maschinenereignisse, die insbesondere in Form von spaltenartigen Daten mit Zeitstempel oder Texten gespeichert werden, und dergleichen. Weitere Beispiele für zu verarbeitende IoT-Daten sind manuelle Eingaben, berechnete KPIs (KPI = Key Performance Indicator) oder sogenannte BLOB-Daten (BLOB = Binary Large Object), wobei Letztere in einem Binärformat gespeichert werden und zum Beispiel ein erfasstes Spektrum mit Begleitwerten repräsentieren.

Solche IoT-Daten werden üblicherweise in unterschiedlichen Datenspeichern abgelegt und dort vorgehalten. Das Ablegen der IoT-Daten in einem bestimmten Datenspeicher erfolgt durch Auswahl des für die IoT-Daten am besten geeigneten Datenspeichers. Die hierfür erforderliche Zuweisung der einzelnen IoT-Daten auf die verfügbaren Datenspeicher erfolgt bisher manuell und unterliegt daher den üblichen Fehlerquellen und Ungenauigkeiten.

Eine Aufgabe der Erfindung besteht entsprechend darin, ein optimiertes Verfahren zum automatischen Betrieb eines Datenspeichersystems (Backend-System) anzugeben, bei dem im Rahmen des Verfahrens automatisch eine Auswahl eines Datenspeichers als Ablageort für eingehende IoT-Daten ausgewählt wird.

Diese Aufgabe wird erfindungsgemäß mittels eines Verfahrens zum Betrieb eines Datenspeichersystems mit den Merkmalen des Anspruchs 1 gelöst. Bei dem Verfahren zum Betrieb eines Datenspeichersystems ist vorgesehen, dass dieses eine Mehrzahl von Datenspeichern umfasst oder dass zu dem Datenspeichersystem eine Mehrzahl von Datenspeichern gehört, dass IoT-Daten, die an jeweils einem Datenpunkt entstehen, automatisch in zumindest einem Datenspeicher gespeichert werden, dass eine automatische Auswahl zumindest eines Datenspeichers zum Speichern der IoT-Daten anhand von Metadaten erfolgt und dass die Metadaten einem Datenpunkt zugeordnet sind.

Der Vorteil der Erfindung besteht darin, dass die Auswahl jeweils zumindest eines Datenspeichers zur Ablage von bei dem Datenspeichersystem eingehenden IoT-Daten automatisch anhand der jeweiligen Metadaten erfolgt und dass diese jeweils einem Datenpunkt, also dem Entstehungsort der IoT-Daten, zugeordnet sind. Damit können für jeden Datenpunkt und dessen IoT-Daten der jeweilige Speicherort und damit auch die Charakteristika der Datenspeicherung feingranular ausgewählt werden. Das Datenspeichersystem kann die Metadaten automatisch auswerten und auf deren Basis automatisch einen jeweiligen Datenspeicher als Ablageort für eingehende IoT-Daten auswählen.

Die oben genannte Aufgabe wird auch mittels eines Datenspeichersystems (Backend-System) gelöst, welches nach dem Verfahren wie hier und im Folgenden beschrieben arbeitet und dazu Mittel zur Durchführung des Verfahrens umfasst. Das im Folgenden beschriebene Verfahren ist zur automatischen Ausführung bevorzugt in Form eines Computerprogramms, ggf. eines verteilten Computerprogramms, realisiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch ein Computer in einem solchen System, in dessen Speicher als Mittel zur Durchführung des Verfahrens und seiner Ausgestaltungen ein solches Computerprogramm geladen oder ladbar ist.

Wenn im Folgenden Verfahrensschritte oder Verfahrensschrittfolgen beschrieben werden, bezieht sich dies auf Aktionen, die aufgrund des Computerprogramms oder unter Kontrolle des Computerprogramms erfolgen, sofern nicht ausdrücklich darauf hingewiesen ist, dass einzelne Aktionen durch einen Benutzer des Computerprogramms veranlasst werden. Zumindest bedeutet jede Verwendung des Begriffs "automatisch", dass die betreffende Aktion aufgrund des Computerprogramms oder unter Kontrolle des Computerprogramms erfolgt.

Damit gilt zur Vermeidung unnötiger Wiederholungen für die weitere Beschreibung, dass Merkmale und Details, die im Zusammenhang mit dem Verfahren zum Betrieb des Datenspeichersystems sowie eventueller Ausgestaltungen beschrieben sind, selbstverständlich auch im Zusammenhang mit und im Hinblick auf ein zur Durchführung des Verfahrens eingerichtetes Datenspeichersystem und umgekehrt gelten. Entsprechend kann das Verfahren auch mittels einzelner oder mehrerer Verfahrensmerkmale fortgebildet sein, welche sich auf Verfahrensschritte beziehen, die von dem Datenspeichersystem ausgeführt werden. Genauso kann das Datenspeichersystem durch Mittel zur Ausführung von im Rahmen des Verfahrens ausgeführten Verfahrensschritten fortgebildet sein. Entsprechend gelten Merkmale und Details, die im Zusammenhang mit dem Verfahren zum Betrieb des Datenspeichersystems und eventueller Ausgestaltungen beschrieben sind, selbstverständlich auch im Zusammenhang mit und im Hinblick auf ein zur Durchführung des Verfahrens bestimmtes Datenspeichersystem und jeweils umgekehrt, so dass bezüglich der Offenbarung zu den einzelnen Aspekten der Erfindung stets wechselseitig Bezug genommen wird bzw. werden kann.

Vorteilhafte Ausgestaltungen der Erfindung sind Gegenstand der Unteransprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform des gegenständlichen Verfahrens nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen. Schließlich ist darauf hinzuweisen, dass das hier angegebene Verfahren auch entsprechend der abhängigen Vorrichtungsansprüche weitergebildet sein kann und umgekehrt.

Bei dem Verfahren nach der Erfindung umfassen die Metadaten zumindest ein Metadatum zur Spezifikation einer Latenz der an dem jeweiligen Datenpunkt entstehenden IoT-Daten. Die Auswahl zumindest eines Datenspeichers zur Ablage der mit diesem Metadatum ausgezeichneten IoT-Daten erfolgt anhand des Metadatums, also anhand der jeweils vorgesehenen Latenz. IoT-Daten, auf die ein schneller Zugriff notwendig ist (geringere Latenz), werden damit zum Beispiel automatisch durch das Datenspeichersystem in einem anderen Datenspeicher abgelegt als IoT-Daten, auf die ein solcher schneller Zugriff nicht notwendig ist. Damit ist gewährleistet, dass die Auswahl des jeweiligen Datenspeichers nach der Notwendigkeit einer späteren Verwendung der IoT-Daten erfolgt. IoT-Daten, auf die kein besonders schneller Zugriff notwendig ist, können damit automatisch in einem preiswerteren Datenspeicher abgelegt werden. Erhöhte Kosten für die Speicherung der IoT-Daten fallen nur dort an, wo dies auch tatsächlich notwendig ist.

Bei der erfindungsgemäßen Ausführungsform des auf Metadaten mit zumindest einem Metadatum zur Spezifikation einer Latenz basierenden Verfahrens erfolgt die Auswahl zumindest eines Datenspeichers nicht unmittelbar anhand des Metadatums. Zusätzlich wird eine vorgegebene oder vorgebbare Konfiguration des Datenspeichersystems berücksichtigt. Diese Konfiguration umfasst eine Definition einer Zuordnung (Mapping) einer Latenz oder eines Latenzbereichs zu jeweils zumindest einem Datenspeicher. Die Auswahl des zumindest einen Datenspeichers erfolgt demnach auf Basis der Konfiguration, zum Beispiel einer Konfiguration in Form einer LookUp-Tabelle oder dergleichen. Innerhalb der Konfiguration wird derjenige Eintrag ausgewählt, welcher zu der in dem Metadatum spezifizierten Latenz passt. Dies gewährleistet eine Entkopplung von der tatsächlichen Spezifikation in dem jeweiligen Metadatum. Durch Anpassung der Konfiguration kann zum Beispiel ein zur Verfügung stehender, schneller, aber bisher noch wenig benutzter Datenspeicher auch für solche IoT-Daten angeboten und verwendet werden, die nach der mittels des Metadatums spezifizierten geforderten Latenz auch in einem weniger schnellen Datenspeicher gespeichert werden könnten. Mittels der Konfiguration und der davon umfassten Zuordnung kann bei der automatischen Auswahl eines Datenspeichers das Verhalten und das Vermögen des Gesamtsystems berücksichtigt werden und die Konfiguration kann daran dynamisch angepasst werden, zum Beispiel wenn im Zuge einer Änderung des Datenspeichersystems ein neuer, bisher nicht benutzter Datenspeicher hinzukommt.

Bei einer erfindungsgemäßen Ausführungsform des Verfahrens wird auch die Datenaktivität in Betracht gezogen, also die Häufigkeit, mit der auf bestimmte in einem Datenspeicher abgelegte IoT-Daten zugegriffen wird. Dafür verwendet das Datenspeichersystem anstelle einer mittels eines Metadatums vorgegebenen Latenz einen anpassbaren Latenzwert, welcher mit einer in den Metadaten definierten Latenz initialisiert wird. Beim Zugriff auf die IoT-Daten eines Datenpunkts überwacht das Datenspeichersystem im Rahmen einer Datenaktivitätserkennung das Überschreiten einer konfigurierbaren Aktivitätsschwelle. Beim Überschreiten der Aktivitätsschwelle wird der anpassbare Latenzwert um einen konfigurierbaren Betrag reduziert. Die Latenz häufig benutzter IoT-Daten wird damit benutzungsabhängig angepasst. Bei einer häufigen Benutzung sinkt der anpassbare Latenzwert und die automatische Auswahl des zumindest einen Datenspeichers durch das Datenspeichersystem erfolgt anhand des anpassbaren Latenzwerts. Häufig benutzte IoT-Daten können damit in einen anderen (schnelleren) Datenspeicher gelangen, als dies nach den Metadaten ursprünglich vorgesehen war. Dies ermöglicht eine dynamische Anpassung der durch das Datenspeichersystem erfolgenden automatischen Auswahl des Speicherorts. Optional kann genauso wie der anpassbare Latenzwert bei häufig benutzten IoT-Daten reduziert wird, dieser bei selten benutzten IoT-Daten um einen konfigurierbaren Betrag erhöht werden. Die betreffenden IoT-Daten können damit ebenfalls in einen anderen (langsameren) Datenspeicher gelangen, als diese nach den Metadaten ursprünglich vorgesehen war. Im Ergebnis entstehen damit für die weniger häufig benutzten IoT-Daten auch geringere Kosten.

Bei einer weiteren Ausführungsform des Verfahrens werden die IoT-Daten eines Datenpunkts je nach einer in den Metadaten definierten Kritikalität automatisch mit erhöhter Ausfallsicherheit gespeichert, zum Beispiel einfach oder mehrfach redundant und/oder an räumlich unterschiedlichen Speicherorten.

Zusätzlich oder alternativ ist bei einer Ausführungsform des Verfahrens vorgesehen, dass die IoT-Daten eines Datenpunkts automatisch nach Ablauf einer in den Metadaten definierten Lebenszeit gelöscht werden. Solche IoT-Daten verursachen dann nach deren automatischer Löschung keine weiteren Kosten mehr.

Bei einer speziellen Ausführungsform des Verfahrens werden die IoT-Daten eines Datenpunkts, für den mittels der Metadaten eine Indizierung angefordert wurde, automatisch in einem hierfür geeigneten Datenspeicher abgelegt. Optional wird im Zusammenhang mit dem Ablegen der IoT-Daten in dem als geeignet ausgewählten Datenspeicher ein Index über die IoT-Daten erstellt.

Schließlich ist bei einer Ausführungsform des Verfahrens optional vorgesehen, dass im Falle einer Größenbegrenzung eines Datenspeichers eine in den Metadaten definierte Latenz zur Bestimmung einer Priorität verwendet wird und dass die IoT-Daten anhand der ermittelten Priorität automatisch in einem schnelleren Datenspeicher oder einem in einem im Vergleich dazu langsameren Datenspeicher abgelegt werden. Dies vermeidet einen "Überlaufen" eines größenbegrenzten Datenspeichers, indem anhand der Priorität auch zumindest ein weiterer Datenspeicher benutzt wird. IoT-Daten mit einer hohen Priorität gelangen weiterhin in den größenbegrenzten Datenspeicher, der aber jetzt aufgrund der Ausweichmöglichkeit in Form des zumindest einen weiteren Datenspeichers länger genutzt werden kann.

Der Vorteil der Erfindung und ihrer Ausgestaltungen besteht damit insbesondere darin, dass die Benutzer eines IoT-Systems feingranular auf die Qualität der Speicherung der IoT-Daten einzelner Datenpunkte Einfluss nehmen können, insbesondere in Bezug auf eine Latenz, eine Indizierung und eine Lebenszeit der IoT-Daten. Mittels des hier vorgestellten Ansatzes ist gewährleistet, dass die Latenz bei der Abfrage der Daten eines Datenpunkts dauerhaft garantiert werden kann. Indizes werden nur bei Bedarf angelegt und zwar nach Vorgabe durch den für die Daten zuständigen Benutzer und ohne einen Administratoreingriff oder dergleichen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: ein IoT-Szenario mit zu erfassenden und in einem Backend-System zu speichernden IoT-Daten,
- FIG 2: das Backend-System mit weiteren Einzelheiten,
- FIG 3: und
- FIG 4: eine graphische Veranschaulichung einer Auswahl eines Datenspeichers des Backend-Systems als Speicherort für IoT-Daten.

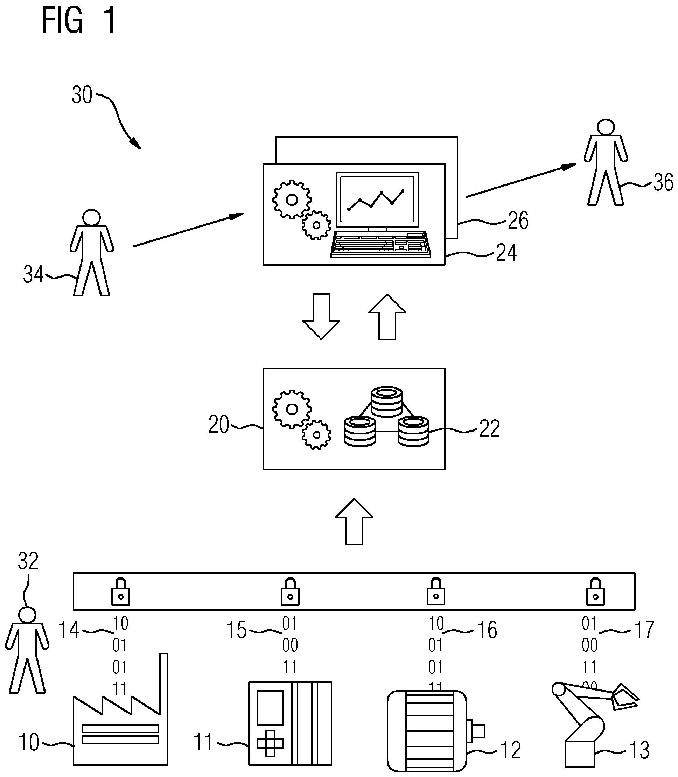

Die Darstellung in FIG 1 zeigt - schematisch vereinfacht - ein typisches IoT-Szenario (IoT = Internet of Things). Von verschiedensten, im Folgenden mitunter auch als Datenpunkte 10, 11, 12, 13 bezeichneten Datenquellen 10-13 stammende IoT-Daten 14, 15, 16, 17 werden (optional verschlüsselt) an ein Backend-System 20 übertragen und in einem von dem Backend-System 20 umfassten Datenspeicher 22 abgelegt. Bei dem Backend-System 20 handelt es sich zum Beispiel um einen in der sogenannten Cloud erreichbaren Computer (Server) oder ein in der Cloud erreichbares Computernetzwerk.

Mittels einer definierten Benutzer- oder Programmierschnittstelle (API; API = Application Programming Interface) ist ein Zugriff auf die gespeicherten IoT-Daten 14-17 möglich. Dies erfolgt mittels einzelner oder mehrerer Applikationen 24 oder Dienste 26.

Die Datenquellen 10-13, das Backend-System 20 und der oder jeder davon umfasste Datenspeicher 22 sowie die oder jede zum Zugriff auf die gespeicherten IoT-Daten 14-17 bestimmte Applikation 24 und/oder der oder jeder zum Zugriff auf die gespeicherten IoT-Daten 14-17 bestimmte Dienst 26 werden im Folgenden als IoT-System 30 bezeichnet.

Auf ein IoT-System 30 können üblicherweise folgende Personen oder Personengruppen einwirken:
- Eine Person oder Organisation 32, welche die Erfassung der IoT-Daten 14-17 initial konfiguriert und dafür mit den Eigenheiten der jeweiligen Datenquelle oder Datenquellen 10-13 vertraut ist.
- Eine Person oder Organisation 34, welche Dienste 26 zur Datennutzung anbietet, zum Beispiel durch Erstellung und Bereitstellung einer Softwareimplementation eines Dienstes 26.
- Eine Person oder Organisation 36, welche einen solchen Dienst 26 oder solche Dienste 26 zum Zugriff auf die gespeicherten IoT-Daten 14-17 nutzt.

Im Interesse einer besseren Lesbarkeit, aber ohne Verzicht auf eine weitergehende Allgemeingültigkeit, wird die Beschreibung auf Basis der folgenden Vereinfachungen fortgesetzt: Anstelle einer Person oder Organisation 32, 34, 36 wird von einem Benutzer 32, 34, 36, nämlich einem ersten Benutzer 32, einem zweiten Benutzer 34 und einem dritten Benutzer 36, gesprochen. Der zweite Benutzer 34 erstellt den oder jeden Dienst 26 zum Zugriff auf die IoT-Daten 14-17 und verwendet und/oder erstellt dafür zumindest eine Applikation 24, mittels derer ebenfalls ein Zugriff auf die gespeicherten I-oT-Daten 14-17 möglich ist. Der dritte Benutzer 36 verwendet zum Zugriff auf die gespeicherten IoT-Daten 14-17 einen Dienst 26 oder einen Dienst 26 aus einer Mehrzahl von zur Verfügung stehenden Diensten 26.

Solche Applikationen 24 oder Dienste 26 werden zum Beispiel auf dem Backend-System 20 ausgeführt und sind dort in grundsätzlich an sich bekannter Art und Weise zum Beispiel mittels eines vom jeweiligen Benutzer 32, 34, 36 verwendeten Geräts (Computer mit Browser, Smartphone oder dergleichen) erreichbar. Alternativ werden solche Applikationen 24 oder Dienste 26 auf einem vom jeweiligen Benutzer 32-36 verwendeten Gerät der oben genannten Art ausgeführt und das jeweilige Gerät stellt in grundsätzlich an sich bekannter Art und Weise eine Datenverbindung zu dem Backend-System 20 her und tauscht die im Rahmen der Bedienhandlungen des Benutzers 32-36 anfallenden Daten mit dem Backend-System 20 aus.

Bisher erfolgt in einem IoT-System 30 die Zuweisung der IoT-Daten 14-17 an einen Datenspeicher 22 zum Beispiel aufgrund eines jeweiligen Alters der IoT-Daten 14-17 (Datenalter). Dies basiert auf der Annahme, dass neue und damit aktuelle IoT-Daten 14-17 üblicherweise relevanter sind als ältere IoT-Daten 14-17. Neue IoT-Daten 14-17 werden daher in einem schnellen, teureren Datenspeicher 22 vorgehalten und nach Ablauf einer vorgegebenen oder vorgebbaren Zeitspanne in einen langsameren, kosteneffizienteren Datenspeicher 22 verschoben. Mit dieser Zuweisung aufgrund des Datenalters ist zum Beispiel das Problem einer hohen Latenz beim Zugriff auf ältere IoT-Daten 14-17 sowie die teilweise Belegung des schnellen Datenspeichers 22 mit tatsächlich wenig relevanten IoT-Daten 14-17 verbunden. Entsprechend wird bei einer aktivitätsbasierten Zuweisung nach Datenalter die zuvor beschriebene statisch konfigurierte Zuweisung mit einer automatischen Erkennung aktiver IoT-Daten 14-17 kombiniert. Lange inaktive (nicht benutzte) IoT-Daten 14-17 werden dabei automatisch in einen kostengünstigeren Datenspeicher 22 ausgelagert. Damit ist allerdings das Problem verbunden, dass sich beim Zugriff auf selten benötigte IoT-Daten 14-17 eine nicht vorhersehbare Latenz ergibt und keine Lösung für das Problem der langfristigen Datenablage gegeben ist. Bei einer aktivitätsbasierten Zuweisung nach dem Datenalter kann das als "Caching" bekannte Verfahren der Datenverarbeitung verwendet werden. Hierbei werden häufig und/oder kürzlich verwendete IoT-Daten 14-17 in einem speziellen, schnellen Speicherbereich vorgehalten. Ein Zugriff auf ein unterlagertes, langsames Speichersystem kann somit teilweise vermieden werden. Übliche Probleme beim Einsatz von Caching sind unter anderem die begrenzte Größe des sogenannten Cache-Speichers, die Sicherstellung der Konsistenz von Cache und unterlagertem Speichersystem sowie eine nicht vorhersehbare Latenz beim Zugriff auf bestimmte IoT-Daten 14-17, da deren Vorhandensein im Cache üblicherweise nicht garantiert werden kann. Caching ist speziell im IoT-Umfeld nur begrenzt hilfreich, da die Verwendung des Caches nicht durch alle Anwender des IoT-Systems 30 steuerbar ist und nur maximal zwei Datenspeicher unterschieden werden.

Wenn hier und im Folgenden von "teuren" oder "preiswerten" / "preiswerteren" Datenspeichern 22 gesprochen wird, bezieht sich dies nur zum Teil auf deren Anschaffungspreis, sondern vielmehr auch auf die Kosten für die Nutzung eines Datenspeichers 22 im laufenden Betrieb. Solche Kosten werden zum Teil nach Art einer Miete abgerechnet. In die Kalkulation der für die Nutzung zu entrichtenden Gebühren fließt gerade die Schnelligkeit des Datenspeichers 22 ein. Entsprechend ist die Nutzung von Speicher in einem schnellen Datenspeicher 22 teurer als die Nutzung von Speicher in einem im Vergleich langsameren Datenspeicher 22.

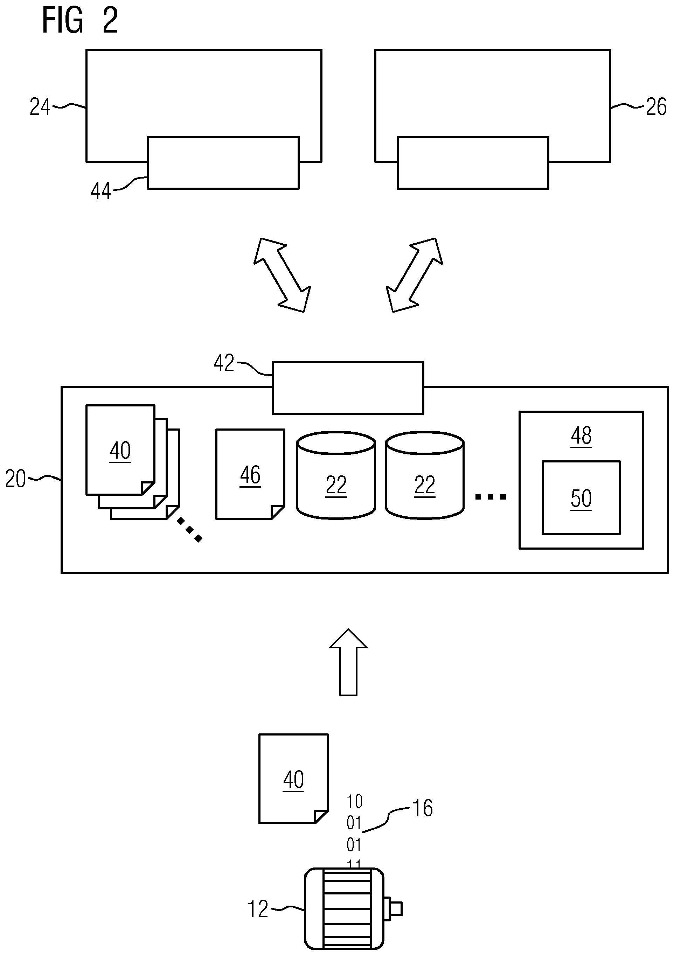

Bei der hier vorgeschlagenen Lösung zur Zuweisung der IoT-Daten 14-17 zu jeweils einem Datenspeicher 22 ist die Verwendung von Metadaten 40 (FIG 2) vorgesehen. Danach wird jede IoT-Datenquelle (Datenpunkt) 10-13 um Metadaten 40 zur Zuordnung der an der jeweiligen Datenquelle 10-13 entstehenden I-oT-Daten 14-17 zu jeweils einem Datenspeicher 22 ergänzt.

Durch die Metadaten 40 wird unter anderem festgelegt,
- welche geplante Latenz der Datenpunkt 10-13 besitzen soll (niedrig bis hoch),
- ob eine Indizierung für den Datenpunkt 10-13 erforderlich ist (ja oder nein), um im Betrieb komplexe Abfragen auf Basis der IoT-Daten 14-17 zu unterstützen und/oder
- welche geplante Lebenszeit für den Datenpunkt 10-13 gelten soll (kurz bis lange oder Anzahl der Tage).

Darüber hinaus kann optional noch vorgesehen sein, dass durch die Metadaten 40 festgelegt wird, welche geplante Kritikalität für den Datenpunkt 10-13 gelten soll (niedrig bis hoch). Gegebenenfalls können je nach gewünschter Eingriffsmöglichkeit weitere Metadaten 40 definiert werden. Metadaten 40 werden - soweit sinnvoll - auf einer Skala angegeben (zum Beispiel 1 .. 100, wobei 1 beispielsweise bedeutet "niedrigste mögliche Latenz").

In der Darstellung in FIG 2 ist exemplarisch eine der Datenquellen 10-13 aus FIG 1 gezeigt. Bei der gezeigten Datenquelle 12 handelt es sich um einen Elektromotor. Die IoT-Daten 16 von dem Elektromotor stammen von zumindest einem dem Elektromotor zugeordneten Sensor (nicht gezeigt) oder dergleichen. Jeder Sensor ist eine Datenquelle / Datenpunkt 12 des Elektromotors. Bei einer Mehrzahl von Sensoren gehören zu dem Elektromotor mehrere Datenpunkte 10-13. Im Interesse einer besseren Lesbarkeit der nachfolgenden Beschreibung wird diese - ohne Verzicht auf eine weitergehende Allgemeingültigkeit - am Beispiel eines Datenpunkts 12 für den Elektromotor fortgesetzt. Eine Vielzahl von Datenpunkten 12 für den Elektromotor und allgemein eine Vielzahl von Datenpunkten 10-13 zu jeder einzelnen Datenquelle 10-13 ist jeweils mitzulesen.

Die initiale Festlegung der Metadaten 40 eines Datenpunkts 10-13 erfolgt im Zusammenhang mit der Konfiguration der Datenerfassung, also zum Beispiel der Festlegung und Konfiguration der Datenpunkte 10-13, durch den ersten Benutzer 32. Die Konfiguration kann beispielsweise an der jeweiligen Datenquelle 10-13 erfolgen. Die resultierenden Metadaten 40 eines jeweiligen Datenpunkts 10-13 können einzeln oder zusammen mit den IoT-Daten 14-17 des Datenpunkts 10-13 zum Backend-System 20 geschickt werden. Alternativ kann die Konfiguration der Metadaten 40 eines Datenpunkts 10-13 auch direkt am Backend-System 20 vorgenommen werden. In beiden Fällen wird die zukünftige Verwaltung der jeweiligen IoT-Daten 14-17 im Vorfeld festgelegt und die Metadaten 40 sind auf Seiten des Backend-Systems 20 gespeichert und stehen dort zur Auswertung und Verarbeitung zur Verfügung.

Optional kann sich eine Vorbesetzung der Metadaten 40 eines Datenpunkts 10-13 aus vorhandenem Domänenwissen ergeben oder kann aus überlagerten Engineering-Systemen abgeleitet werden. Als Domänenwissen werden zum Beispiel Informationen über die Betriebs- und Dateneigenschaften einer als Datenquelle 10-13 fungierenden Maschine oder dergleichen oder eines Maschinentyps etc. verwendet. Zum Beispiel müssen bei einem Drehzahlwächter eines Elektromotors häufiger Drehzahlmesswerte erfasst werden als beispielsweise bei einem Temperatursensor, welcher die Umgebungstemperatur erfasst. Daraus resultieren unterschiedliche Datenmengen, aber auch unterschiedliche notwendige Latenzen. Um zum Beispiel schnell einen Verlauf der Drehzahl des Elektromotors erkennen zu können, muss schnell auch ein Zugriff auf kürzlich erfasste ältere Messwerte möglich sein. Wegen einer sich üblicherweise nur langsam verändernden Umgebungstemperatur sind demgegenüber zum Erkennen einer Änderung des Temperaturverlaufs höhere Latenzen zulässig.

Des Weiteren können die Metadaten 40 eines Datenpunkt 10-13 auch während des Betriebs des IoT-Systems 30 durch den zweiten Benutzer 34 festgelegt und/oder angepasst werden. Dies erfolgt mittels einer Systemschnittstelle 42 am und zum Backend-System 20. Auf diese Weise kann zum Beispiel bei Bedarf eine in den Metadaten 40 eines Datenpunkts 10-13 ursprünglich geplante Latenz reduziert und in eine tatsächliche wirksame Latenz überführt werden. Ebenso kann zum Beispiel eine in den Metadaten 40 eines Datenpunkts 10-13 ursprünglich definierte Lebenszeit nachträglich erhöht werden und/oder nachträglich eine Indizierung angefordert werden. Solche Einwirkungsmöglichkeiten werden optional in grundsätzlich an sich bekannter Art und Weise begrenzt und sind dann in eine Berechtigungs-Systematik eingebettet. Zur Implementation solcher Einwirkungsmöglichkeiten umfasst eine von dem zweiten Benutzer 34 verwendete Applikation 24 zumindest eine Schnittstelle 44 zum Zugriff auf die gespeicherten IoT-Daten 14-17 und die Metadaten 40. Eine Anpassung der Metadaten 40 eines Datenpunkts 10-13 erfolgt zum Beispiel durch den Aufruf einer Schnittstellenfunktion, zum Beispiel einer Schnittstellenfunktion wie "SetDatapointLatency( *datapoint, newLatency* )", wobei *datapoint* den Datenpunkt 10-13 bezeichnet und *newLatency* die durch den Aufruf der Schnittstellenfunktion vorgegebene neue Latenz ist. Im Folgenden wird vereinfachend mitunter nur kurz von Metadaten 40 gesprochen. Metadaten 40 sind immer mit genau einem Datenpunkt 10-13 verbunden. Daher ist bei jeder Erwähnung von Metadaten 40 stets mitzulesen, dass es sich um die Metadaten 40 jeweils genau eines Datenpunkts 10-13 handelt.

Zur effektiven Wahrnehmung solcher Einwirkungsmöglichkeiten und zur optimalen Einstellung der Metadaten 40 verfügt der zweite Benutzer 34 über Domänenwissen. Darüber hinaus kann der zweite Benutzer 34 dem dritten Benutzer 36 zum Beispiel im Rahmen eines später zum Zugriff auf die IoT-Daten 14-17 benutzten Diensts 26 Einstellmöglichkeiten für einzelne Datenpunkte 10-13 oder Klassen von Datenpunkten 10-13 einräumen. Diese Einstellmöglichkeiten werden über die erwähnte Systemschnittstelle 42 von der Applikation 24 an das Backend-System 20 weitergereicht. Dies erlaubt das Anlegen oder Anpassen von Metadaten 40 zu dem jeweiligen Datenpunkt 10-13 oder den jeweiligen Datenpunkten 10-13.

Das Backend-System 20 ist dafür bestimmt und eingerichtet, die Metadaten 40 bei der Zuweisung der jeweils von einer Datenquelle / einem Datenpunkt 10-13 erhaltenen IoT-Daten 14-17 automatisch zu berücksichtigen. Zu einer Datenquelle 10-13 können ein Datenpunkt 10-13 oder mehrere Datenpunkte 10-13 gehören. Zu einem Sensor als Datenquelle 10-13 gehört üblicherweise genau ein Datenpunkt 10-13, nämlich ein Datenpunkt 10-13, an dem die von dem jeweiligen Sensor gelieferten IoT-Daten 14-17, zum Beispiel Temperaturdaten, entstehen. Zu einem Industrieroboter als Datenquelle 10-13 gehören üblicherweise mehrere Datenpunkte 10-13, nämlich zum Beispiel ein Datenpunkt 10-13, an welchem IoT-Daten 14-17 entstehen, welche die aktuelle Konfiguration des Industrieroboters repräsentieren, ein Datenpunkt 10-13, an welchem IoT-Daten 14-17 entstehen, welche Zustandsmeldungen oder dergleichen des Industrieroboters und/oder einer Bearbeitung eines Werkstücks mittels des Industrieroboters repräsentieren, und so weiter.

IoT-Daten 14-17, die von einem Datenpunkt 10-13 stammen, dem mittels der Metadaten 40 eine geringe angeforderte Latenz zugeordnet wurde, werden im Bereich des Backend-Systems 20 in einem schnellen Datenspeicher 22 abgelegt. Kurz gefasst kann man auch davon sprechen, dass mittels der Metadaten 40 der Datenpunkt 10-13 selbst einem solchen schnellen Datenspeicher 22 zugeordnet ist oder wird. Entsprechend werden IoT-Daten 14-17, die von einem Datenpunkt 10-13 stammen, dem mittels der Metadaten 40 eine hohe Latenz zugeordnet wurde, in einem Vergleich zu dem schnellen Datenspeicher 22 langsameren Datenspeicher 22 abgelegt. Entsprechend kann man hier formulieren, dass mittels der Metadaten 40 ein solcher Datenpunkt 10-13 einem langsameren Datenspeicher 22 zugeordnet ist oder wird.

Die exakte Zuordnung der IoT-Daten 14-17 oder des jeweiligen Datenpunkts 10-13 zu genau einem Datenspeicher 22 erfolgt durch das Backend-System 20. Dafür greift das Backend-System 20 auf eine vorgegebene oder vorgebbare und im Folgenden als Backend-System-Konfiguration 46 bezeichnete Konfiguration 46 zu. Die Backend-System-Konfiguration 46 definiert nach Art einer LookUp-Tabelle oder dergleichen eine Zuordnung der jeweils in den Metadaten 40 definierten Latenzen zu zumindest einem Datenspeicher 22. Damit wird eine Entkopplung der Metadaten 40 von dem vom Backend-System 20 umfassten oder erreichbaren Speichersystem und dem oder jedem zugehörigen Datenspeicher 22 erreicht.

Falls einzelne Datenspeicher 22 eine Größenbegrenzung aufweisen, verwendet das Backend-System 20 optional automatisch die in den Metadaten 40 definierte Latenz, um eine Priorität zu bestimmen. Dann entscheidet sich anhand der Priorität, welche IoT-Daten 14-17 in einem schnelleren Datenspeicher 22 abgelegt werden und welche IoT-Daten 14-17 zur Schonung der Ressourcen des schnelleren Datenspeichers 22 in einem im Vergleich dazu langsameren Datenspeicher 22 gelangen.

Die IoT-Daten 14-17 eines Datenpunkt 10-13, für den mittels der Metadaten 40 eine Indizierung angefordert wurde, werden vom Backend-System 20 automatisch in einem hierfür geeigneten Datenspeicher 22 abgelegt. Zudem wird bei Bedarf ein Index für die IoT-Daten 14-17 des Datenpunkts 10-13 erzeugt, um später komplexere Datenabfragen zu ermöglichen.

Ältere IoT-Daten 14-17 werden vom Backend-System 20 automatisch nach Ablauf der jeweils mittels der Metadaten 40 definierten Lebenszeit gelöscht.

Optional können die IoT-Daten 14-17 eines Datenpunkts 10-13 je nach einer in den Metadaten 40 definierten Kritikalität automatisch durch das Backend-System 20 mit erhöhter Ausfallsicherheit gespeichert werden, also zum Beispiel gleichzeitig in mehreren Datenspeichern 22 abgelegt werden. Insoweit kommt beispielsweise in Betracht, dass das Backend-System 20 automatisch die IoT-Daten 14-17 eines Datenpunkts 10-13, dem mittels der Metadaten 40 eine hohe Kritikalität zugeordnet wurde, dreifach redundant in räumlich getrennten Datenspeichern 22 gespeichert werden. Die jeweilige Zuordnung einer in den Metadaten 40 definierten Kritikalität und Ausfallsicherheit zu einem jeweiligen Speicherschema und/oder der gemäß einem Speicherschema zu verwendenden Datenspeicher 22 ist zum Beispiel ebenfalls in der Backend-System-Konfiguration 46 definiert. Auch dies entkoppelt eine in den Metadaten 40 vorgenommene Konfiguration von dem vom Backend-System 20 umfassten oder erreichbaren Speichersystem und dem oder jedem zugehörigen Datenspeicher 22.

Des Weiteren können die IoT-Daten 14-17 eines Datenpunkts 10-13 optional automatisch durch das Backend-System 20 anhand eines Metadatums "Alterung" nach Erreichen der Alterungszahl in einen nächstlangsameren Datenspeicher 22 verschoben werden, um Betriebskosten zu optimieren.

Das automatische Ablegen von IoT-Daten 14-17 eines Datenpunkts 10-13 anhand von dessen Metadaten 40 durch das Backend-System 20 in zumindest einen davon umfassten oder erreichbaren Datenspeicher 22 kann optional mit einem grundsätzlich an sich bekannten Verfahren zur automatischen Datenaktivitätserkennung kombiniert werden. Hiermit kann die tatsächlich wirksame Latenz verbessert werden, falls sich ergeben sollte, dass eine in den Metadaten 40 ursprünglich definierte Latenz ungünstig oder unpassend ist. Wenn zum Beispiel einem Datenpunkt 10-13 mittels der Metadaten 40 eine hohe Latenz zugewiesen wurde und tatsächlich dessen IoT-Daten 14-17 mittels eines Diensts 26 häufig abgefragt werden, ist eine geringere Latenz als die ursprünglich definierte Latenz sinnvoll. Bei Überschreiten einer vordefinierten Aktivitätsschwelle wird mittels des Backend-Systems 20 die ursprünglich definierte Latenz angepasst. Die Anpassung erfolgt zum Beispiel, indem anstelle der ursprünglich definierten Latenz ein anpassbarer Latenzwert verwendet wird. Dieser wird mit der ursprünglich definierten Latenz initialisiert und bei Überschreiten der Aktivitätsschwelle um einen konfigurierbaren Betrag reduziert.

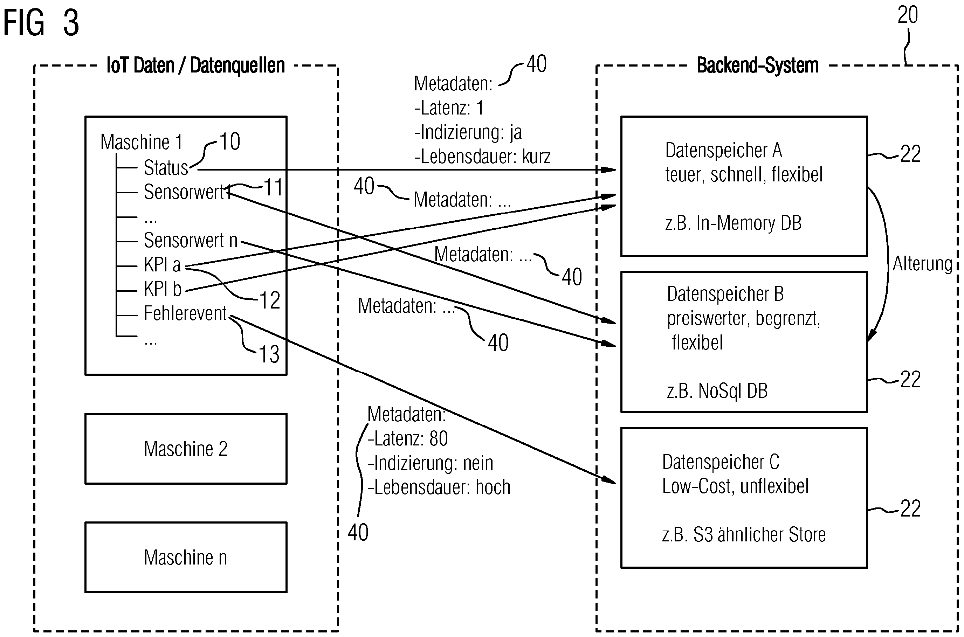

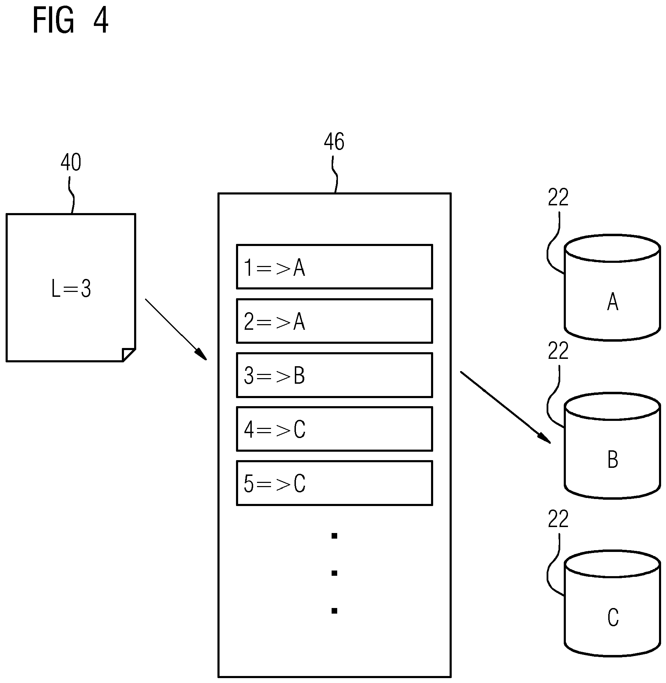

Die Darstellungen in FIG 3 und FIG 4 zeigen zur weiteren Veranschaulichung einzelne Aspekte des oben Gesagten in graphischer Form. Die Darstellung in FIG 4 zeigt, dass die in Form der von links nach rechts verlaufenden Pfeile veranschaulichten IoT-Daten 14-17 von den einzelnen Datenpunkten 10-13 in Abhängigkeit von den jeweiligen Metadaten 40 in einzelne Datenspeicher 22 des Backend-Systems 20 gelangen. Die Darstellung in FIG 4 zeigt dabei den Einfluss der Backend-System-Konfiguration 46. Bei einer grundsätzlich optionalen Verwendung einer solchen Backend-System-Konfiguration 46 legen die Metadaten 40 den jeweiligen Datenspeicher 22 nicht direkt fest. Diese konkrete Festlegung erfolgt in der Backend-System-Konfiguration 46. Bei dem in FIG 4 gezeigten Beispiel umfassen die Metadaten 40 ein Metadatum, welches eine Latenz definiert ("L = 3"). Die Backend-System-Konfiguration 46 umfasst in Form einer LookUp-Tabelle oder dergleichen eine Zuordnung eines Latenz-Werts oder eines Latenz-Wertebereichs zu einem Datenspeicher 22. In der Darstellung in FIG 4 sind die von dem Backend-System 20 umfassten Datenspeicher 22 symbolisch mit "A", "B" und "C" bezeichnet. Die Backend-System-Konfiguration 46 umfasst für die in den Metadaten 40 definierte Latenz eine Zuordnung zu genau einem Datenspeicher 22 ("3 => B"). Die Metadaten 40 zusammen mit der Backend-System-Konfiguration 46 legen also fest, dass die IoT-Daten 14-17 des mit diesen Metadaten 40 ausgezeichneten Datenpunkts 10-13 in den symbolisch mit "B" bezeichneten Datenspeicher 22 gelangen. Für die Metadaten 40 anderer Datenpunkte 10-13 gilt dies entsprechend.

Die Ausführung des oben beschriebenen Verfahrens, nämlich das von den einem Datenpunkt 10-13 zugeordneten Metadaten 40 abhängige Abspeichern der IoT-Daten 14-17 des jeweiligen Datenpunkts 10-13 durch das Backend-System 20 und im Bereich des Backend-Systems 20, erfolgt mittels und unter Kontrolle einer Steuerungseinheit 48 (FIG 2) des Backend-Systems 20. Dabei handelt es sich zum Beispiel um einen grundsätzlich an sich bekannten Computer mit einem Speicher und einer Verarbeitungseinheit in Form von oder nach Art eines Mikroprozessors. In den Speicher ist ein als Backend-System-Steuerungsprogramm 50 (FIG 2) fungierendes Computerprogramm 50 geladen, das beim Betrieb des Backend-Systems 20 ausgeführt wird. Das Backend-System-Steuerungsprogramm 50 umfasst Computerprogrammanweisungen zur Implementierung des oben beschriebenen, von Metadaten 40 abhängigen Abspeicherns von IoT-Daten 14-17 in jeweils zumindest einem Datenspeicher 22.

Das hier als Backend-System 20 bezeichnete Datenspeichersystem 20 befindet sich vorteilhaft, aber nicht notwendig, in der sogenannten Cloud und ist dementsprechend über das Internet erreichbar. Der oder jeder von dem Datenspeichersystem 20 verwendete Datenspeicher 22 kann dem Datenspeichersystem 20 lokal zugeordnet sein oder seinerseits über das Internet erreichbar sein.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen. Die Erfindung wird durch die anliegenden Ansprüche definiert.

Einzelne im Vordergrund stehende Aspekte der hier eingereichten Beschreibung lassen sich damit kurz wie folgt zusammenfassen: Angegeben werden ein Verfahren zum Betrieb eines Datenspeichersystems 20 mit einer Mehrzahl von Datenspeichern 22, wobei im Rahmen des Verfahrens an jeweils einem Datenpunkt 10-13 entstehende IoT-Daten 14-17 in zumindest einem Datenspeicher 22 gespeichert werden, wobei eine automatische Auswahl zumindest eines Datenspeichers 22 zum Speichern der IoT-Daten 14-17 anhand von Metadaten 40 erfolgt und wobei die Metadaten 40 einem Datenpunkt 10-13 zugeordnet sind, sowie ein Computerprogramm 50 mit einer Implementation des Verfahrens und ein nach dem Verfahren arbeitendes Datenspeichersystem 20.

## Patentansprüche

1. Verfahren zum Betrieb eines Datenspeichersystems (20) mit einer Mehrzahl von Datenspeichern (22),
wobei im Rahmen des Verfahrens an jeweils einem Datenpunkt (10-13) entstehende IoT-Daten (14-17) in zumindest einem Datenspeicher (22) gespeichert werden,
**dadurch gekennzeichnet, dass**
eine automatische Auswahl zumindest eines Datenspeichers (22) zum Speichern der IoT-Daten (14-17) anhand von Metadaten (40) erfolgt und
die Metadaten (40) einem Datenpunkt (10-13) zugeordnet sind,
die Metadaten (40) zumindest ein Metadatum zur Spezifikation einer Latenz der an dem jeweiligen Datenpunkt (10-13) entstehenden IoT-Daten (14-17) umfassen,
die Auswahl zumindest eines Datenspeichers (22) anhand des zumindest einen Metadatums sowie einer Konfiguration (46) des Datenspeichersystems (20) erfolgt,
die Konfiguration (46) eine Definition einer Zuordnung einer Latenz oder eines Latenzbereichs zu jeweils zumindest einem Datenspeicher (22) umfasst,
wobei ein anpassbarer Latenzwert mit einer in den Metadaten (40) definierten Latenz initialisiert wird,
wobei beim Zugriff auf die IoT-Daten (14-17) eines Datenpunkts (10-13) im Rahmen einer Datenaktivitätserkennung das Überschreiten einer konfigurierbaren Aktivitätsschwelle überwacht wird und
wobei beim Überschreiten der Aktivitätsschwelle der anpassbare Latenzwert um einen konfigurierbaren Betrag reduziert wird.

2. Verfahren nach dem Anspruch 1,
wobei die IoT-Daten (14-17) eines Datenpunkts (10-13) je nach einer in den Metadaten (40) definierten Kritikalität automatisch mit erhöhter Ausfallsicherheit gespeichert werden.

3. Verfahren nach einem der vorangehenden Ansprüche,
wobei die IoT-Daten (14-17) eines Datenpunkts (10-13) automatisch nach Ablauf einer in den Metadaten (40) definierten Lebenszeit gelöscht werden.

4. Verfahren nach einem der vorangehenden Ansprüche,
wobei die IoT-Daten (14-17) eines Datenpunkts (10-13), für den mittels der Metadaten (40) eine Indizierung angefordert wurde, automatisch in einem hierfür geeigneten Datenspeicher (22) abgelegt werden.

5. Verfahren nach einem der vorangehenden Ansprüche,
wobei im Falle einer Größenbegrenzung eines Datenspeichers (22) eine in den Metadaten (40) definierte Latenz zur Bestimmung einer Priorität verwendet wird und
wobei die IoT-Daten (14-17) anhand der ermittelten Priorität automatisch in einem schnelleren Datenspeicher (22) oder einem im Vergleich dazu langsameren Datenspeicher (22) abgelegt werden.

6. Computerprogramm (50) mit Programmcodemitteln, um alle Schritte von jedem beliebigen der Ansprüche 1 bis 5 durchzuführen, wenn das Computerprogramm (50) auf einer Steuerungseinheit (48) eines Datenspeichersystems (20) ausgeführt wird.

7. Digitales Speichermedium mit elektronisch auslesbaren Steuersignalen, die so mit einer Steuerungseinheit (48) eines Datenspeichersystems (20) zusammenwirken können, dass ein Verfahren nach einem der Ansprüche 1 bis 5 ausgeführt wird.

8. Datenspeichersystem (20) mit einer Mehrzahl von Datenspeichern (22), wobei als Mittel zur Ausführung eines Verfahrens nach einem der Ansprüche 1 bis 5 eine einen Speicher umfassende Steuerungseinheit (48) und ein Computerprogramm (50) nach Anspruch 6 fungieren, wobei das Computerprogramm (50) in den Speicher der Steuerungseinheit (48) geladen ist und beim Betrieb des Datenspeichersystems (20) durch eine Verarbeitungseinheit der Steuerungseinheit (48) ausgeführt wird.

## Claims

1. Method for operating a data storage system (20) comprising a plurality of data storage units (22),
wherein in the context of the method, IoT data (14-17) which arises at one data point (10-13) respectively is stored in at least one data storage unit (22),
**characterised in that**
an automatic selection of at least one data storage unit (22) for storage of the IoT data (14-17) takes place on the basis of metadata (40) and
the metadata (40) is assigned to a data point (10-13),
the metadata (40) comprises at least one metadatum for specification of a latency of the IoT data (14-17) arising at the respective data point (10-13),
the selection of at least one data storage unit (22) takes place on the basis of the at least one metadatum and a configuration (46) of the data storage system (20),
the configuration (46) comprises a definition of an assignment of a latency or a latency region to respectively at least one data storage unit (22),
wherein an adaptable latency value is initialised with a latency defined in the metadata (40),
wherein on accessing the IoT data (14-17) of a data point (10-13), in the context of a data activity recognition, the exceeding of a configurable activity threshold is monitored and
wherein on exceeding the activity threshold, the adaptable latency value is reduced by a configurable amount.

2. Method according to claim 1,
wherein the IoT data (14-17) of a data point (10-13) is automatically stored according to a criticality defined in the metadata (40) with increased failure prevention.

3. Method according to one of the preceding claims,
wherein the IoT data (14-17) of a data point (10-13) is automatically deleted after expiry of a lifetime defined in the metadata (40).

4. Method according to one of the preceding claims,
wherein the IoT data (14-17) of a data point (10-13) for which, by means of the metadata (40), an indexing has been requested is automatically deposited in a data storage unit (22) suitable therefor.

5. Method according to one of the preceding claims,
wherein, in the event of a size limit of a data storage unit (22), a latency defined in the metadata (40) is used for determining a priority and
wherein, on the basis of the priority determined, the IoT data (14-17) is automatically deposited in a faster data storage unit (22) or in a data storage unit (22) which is slower in comparison therewith.

6. Computer program (50) with program code means in order to carry out all the steps of any of the claims 1 to 5 when the computer program (50) is carried out on a control unit (48) of a data storage system (20).

7. Digital storage medium with electronically readable control signals which can cooperate with a control unit (48) of a data storage system (20) such that a method according to one of claims 1 to 5 is carried out.

8. Data storage system (20) comprising a plurality of data storage units (22), wherein a control unit (48) comprising a storage unit and a computer program (50) according to claim 6 function as means for carrying out a method according to one of claims 1 to 5, wherein the computer program (50) is loaded into the storage unit of the control unit (48) and, on operation of the data storage system (20) is carried out by a processing unit of the control unit (48).

## Revendications

1. Procédé pour faire fonctionner un système (20) de mémoire de données comprenant une pluralité de mémoires (22) de données,
dans lequel, dans le cadre du procédé, on met, dans au moins une mémoire (22) de données, des données (14-17) IoT se créant respectivement à un point (10-13) de données,
**caractérisé en ce que**
une sélection automatique d'au moins une mémoire (22) de données est effectuée, à l'aide de métadonnées (40) pour la mise en mémoire des données (14-17) IoT, et
les métadonnées (40) sont associées à un point (10-13) de données,
les métadonnées (40) comprennent au moins une métadonnée de spécification d'une latence des données (14-17) IoT se créant au point (10-13) respectif de données,
la sélection d'au moins une mémoire (22) de données a lieu, à l'aide de la au moins une métadonnée ainsi que d'une configuration (46) du système (20) de mémoire de données,
la configuration (46) comprend une définition d'une association d'une latence ou d'une plage de latence à respectivement au moins une mémoire (22) de données,
dans lequel on initialise une valeur de latence adaptable par une latence définie dans les métadonnées (40),
dans lequel, lors de l'accès aux données (14-17) IoT d'un point (10-13) de données, on contrôle, dans le cadre d'une détection d'activité de données, le dépassement d'un seuil d'activité configurable, et
dans lequel, si le seuil d'activité est dépassé, on réduit la valeur de latence adaptable d'un montant configurable.

2. Procédé suivant la revendication 1,
dans lequel on met en mémoire automatiquement avec une sécurité augmentée vis-à-vis de la défaillance, les données (14-17) IoT d'un point (10-13) de données suivant une criticalité définie dans les métadonnées (40).

3. Procédé suivant l'une des revendications précédentes,
dans lequel on efface les données (14-17) IoT d'un point (10-13) de données automatiquement, après l'expiration d'un temps de vie défini dans les métadonnées (40).

4. Procédé suivant l'une des revendications précédentes,
dans lequel on met automatiquement, dans une mémoire (22) de données propre à cet effet, les données (14-17) IoT d'un point (10-13) de données, pour lesquelles une indexation a été demandée au moyen des métadonnées (40).

5. Procédé suivant l'une des revendications précédentes,
dans lequel, dans le cas d'une limitation de la dimension d'une mémoire (22) de données, on utilise une latence définie dans les métadonnées (40) pour la détermination d'une priorité, et
dans lequel on met les données (14-17) IoT, à l'aide de la priorité déterminée automatiquement dans une mémoire (22) de données plus rapide ou dans une mémoire (22) de données comparativement plus lente.

6. Programme (50) d'ordinateur, comprenant des moyens de code de programme pour effectuer tous les stades de chacune quelconque des revendications 1 à 5, lorsque le programme (50) d'ordinateur est réalisé sur une unité (48) de commande d'un système (20) de mémoire de données.

7. Support de mémoire numérique comprenant des signaux de commande déchiffrables électroniquement, qui peuvent coopérer avec une unité (48) de commande d'un système (20) de mémoire de données, de manière à exécuter un procédé suivant l'une des revendications 1 à 5.

8. Système (20) de mémoire de données comprenant une pluralité de mémoires (22) de données, dans lequel fonctionne, comme moyen de réalisation d'un procédé suivant l'une des revendications 1 à 5, une unité (48) de commande comprenant une mémoire et un programme (50) d'ordinateur suivant la revendication 6, dans lequel le programme (50) d'ordinateur est chargé dans la mémoire de l'unité (48) de commande et est réalisé lors du fonctionnement du système (20) de mémoire de données par une unité de traitement de commande de l'unité (48) de commande.
